# FASCICULE DE BREVET EUROPEEN

(11) **EP 0 975 482 B1**
(45) Date de publication et mention de la délivrance du brevet: **14.05.2003**
(21) Numéro de dépôt: 99903788.0
(22) Date de dépôt: 19.02.1999
(51) Int. Cl.: B60K 15/035

(54) **CANISTER DE RESERVOIR A CARBURANT ET RESERVOIR A CARBURANT MUNI D'UN TEL CANISTER**
BEHÄLTER FÜR KRAFTSTOFFTANK UND KRAFTSTOFFTANK MIT EINEM SOLCHEN BEHÄLTER
FUEL TANK CANISTER AND FUEL TANK EQUIPPED WITH SAME

(30) Priorité: 19.02.1998 FR 9802019
(43) Date de publication de la demande: 02.02.2000
(73) Titulaire: COMPAGNIE PLASTIC OMNIUM, 69007 Lyon (FR)
(72) Inventeur: ARNAL, André, F-38290 Frontonas (FR); DECOBERT, Philippe, F-60120 Paillart (FR); ROSSEEL, Alexis, F-60200 Compiegne (FR)
(74) Mandataire: Leszczynski, André
(86) Numéro de dépôt international: FR9900377
(87) Numéro de publication internationale: WO99042316

(56) Documents cités:
- EP-A- 0 775 606
- EP-A- 0 921 025
- DE-A- 4 304 180
- DE-A- 4 429 875
- DE-C- 19 524 254
- US-A- 4 173 207
- US-A- 4 701 198
- US-A- 4 919 103

## Description

La présente invention concerne un canister de réservoir à carburant et un réservoir à carburant muni d'un tel canister.

On sait qu'un réservoir à carburant comporte dune part un circuit de dégazage qui permet aux gaz contenus dans le réservoir de s'échapper lors du remplissage et d'autre part un circuit dit de mise à l'air pour évacuer la majeure partie des gaz qui sont générés en son intérieur, du fait des secousses provoquées par le roulage du véhicule.

Un tel circuit de mise à l'air comprend, de façon traditionnelle, un dispositif de fermeture du circuit en cas de retournement du réservoir, généralement constitué par un clapet également désigné "roll-over valve" ou "ROV", qui a pour fonction d'empêcher le carburant liquide de s'échapper du réservoir par le circuit d'évacuation des gaz en cas de retournement du véhicule, un dispositif pour interdire le surremplissage du réservoir, également désigné "ISR", dont la fonction est d'obturer le circuit de mise à l'air pendant le remplissage ce qui a pour effet de maintenir dans le réservoir une poche de gaz apte à absorber une éventuelle surpression résultant d'un échauffement du carburant liquide ou d'une déformation du réservoir, un dispositif pour séparer le carburant liquide des gaz à évacuer, également désigné "SLV", pour éviter que des gouttelettes de carburant ne pénètrent dans le circuit de mise à l'air et un canister pour fixer les molécules de carburant gazeux présentes dans les gaz évacués et ne laisser s'échapper dans l'atmosphère que de l'air débarrassé des vapeurs de carburant.

Le canister est la partie du circuit de mise à l'air qui justifie la présence du "SLV" car il renferme, comme matériau apte à adsorber les molécules de carburant gazeux, du charbon actif qui se dégrade au contact de liquides.

Pour relier tous ces dispositifs, il faut préparer et monter un certain nombre de conduits, ce qui implique un coût non négligeable d'une part en termes de matière première, car ces conduits, pour résister et être étanches aux hydrocarbures, doivent être réalisés en matériaux coûteux tels que des matériaux multicouche à base de polyamide ou de polyéthylène haute densité, associé à une résine formant barrière telle que le polyfluorure de vinylidène ou le polyalcool vinylique, et d'autre part en termes de main d'oeuvre, car il est difficile d'automatiser le raccordement des dispositifs, surtout si certains d'entre eux sont fixés sur le véhicule et non sur le réservoir, comme c'est en général le cas au moins pour le canister, ce qui interdit de monter les conduits de raccordement en dehors de la chaîne de montage du véhicule.

En outre, dans le circuit de mise à l'air constitué par les conduits et les différents dispositifs énumérés ci-dessus, qui doivent être montés en série, les conduits entraînent des pertes de charge importantes, ce qui nuit à l'efficacité de la mise à l'air.

De plus, la présence des conduits à l'extérieur du réservoir accroît l'encombrement de ce dernier, complique sa manipulation lors de son installation sur le véhicule et oblige à tenir compte de contraintes imposées par l'environnement du réservoir sur le véhicule, d'où la nécessité fréquente de faire parcourir auxdits conduits un chemin long et tourmenté sur le réservoir.

Un dispositif correspondant au préambule de la revendication 1 est aussi connu du document US 4,173,207.

La présente invention vise à résoudre ces inconvénients en proposant un canister et un réservoir à carburant d'une conception nouvelle.

La présente invention a tout d'abord pour objet un canister destiné à être placé sur un circuit de mise à l'air d'un réservoir et renfermant un produit de filtrage apte à fixer des molécules de carburant gazeux, caractérisé par le fait qu'il comprend au moins un compartiment communiquant avec son produit de filtrage et apte à recevoir un dispositif choisi parmi les dispositifs suivants : dispositif de fermeture du circuit de mise à l'air en cas de retournement du réservoir, dispositif pour interdire le surremplissage du réservoir et dispositif pour séparer le carburant liquide des gaz à évacuer.

On comprend que grâce à l'invention, les problèmes liés à la présence des conduits à l'extérieur du réservoir peuvent être éliminés en intégrant tout ou partie des dispositifs présents sur le circuit de mise à l'air dans le canister.

Il en résulte une importante réduction des coûts de réalisation et de montage du circuit de mise à l'air, ainsi qu'une meilleure efficacité de la ventilation.

La présente invention a également pour objet un réservoir à carburant muni d'un canister tel que décrit ci-dessus.

Dans un mode de réalisation préféré de l'invention, le réservoir à carburant comporte un logement débouchant vers l'extérieur du réservoir pour recevoir le canister.

Dans ce cas, un seul conduit de gaz sort du réservoir pour rejoindre le canister, lequel est par ailleurs relié à un conduit d'évacuation de l'air débarrassé des vapeurs de carburant.

Dans une variante, le fond du logement comporte un orifice pour permettre au canister de communiquer directement avec l'intérieur du réservoir. Le conduit de gaz sortant du réservoir peut ainsi être éliminé et le circuit de mise à l'air se limite au boîtier du canister raccordé au conduit d'évacuation de l'air débarrassé des vapeurs de carburant.

Dans une version particulière, le canister comporte un boîtier qui est au moins partiellement constitué par la paroi du logement, le produit filtrant du canister étant contenu dans une cartouche filtrante, de préférence amovible, engagée dans le logement par l'extérieur du réservoir.

Cette variante est particulièrement avantageuse car elle élimine tout problème d'étanchéité concernant le raccord reliant le conduit de gaz au canister.

Dans un mode de réalisation préféré, et notamment pour réaliser cette version du réservoir, on fabrique le réservoir en réunissant par collage ou soudage deux parties obtenues par injection de matière plastique.

Dans le but de mieux faire comprendre l'invention, on va en décrire maintenant des modes de réalisation donnés à titre d'exemples non limitatifs, en référence au dessin annexé dans lequel :
- la figure 1 représente, en arraché partiel, un réservoir à carburant selon un premier mode de réalisation de l'invention,
- la figure 2 représente, en coupe, le canister de la figure 1 et
- la figure 3 est une vue rapprochée d'un canister intégré à un réservoir selon un autre mode de réalisation de l'invention.

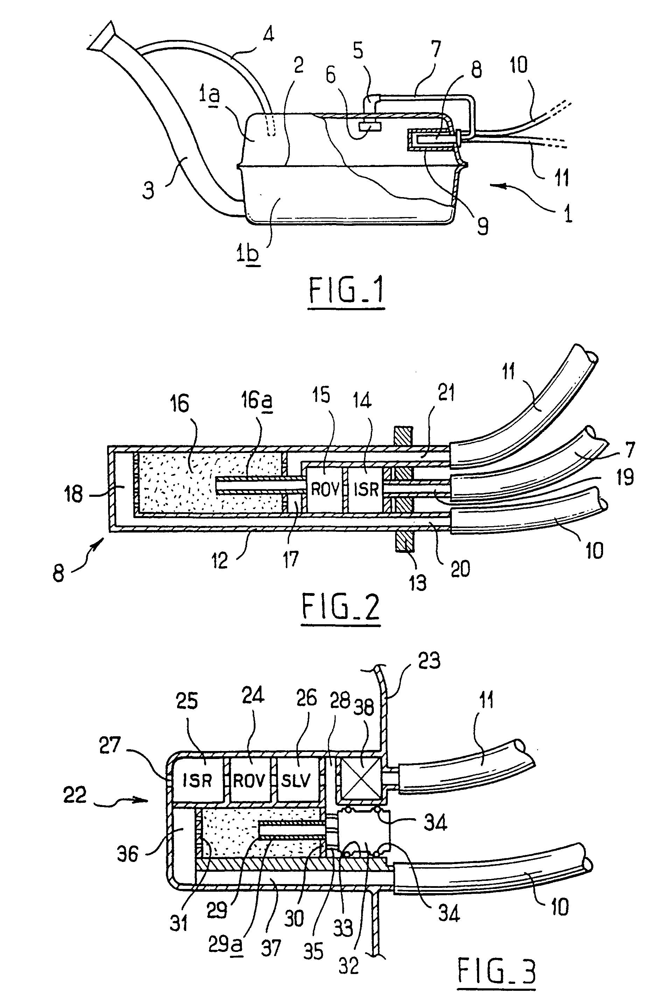

Le réservoir à carburant 1 de la figure 1 est constitué par une partie supérieure 1a et une partie inférieure 1b obtenues séparément par injection de matière plastique et réunies par collage ou soudage selon un plan médian 2.

Une tubulure de remplissage 3 et un conduit de dégazage 4 sont prévus, selon un agencement connu, pour permettre l'échappement des gaz lors du remplissage du réservoir.

Un tube 5 traverse la paroi supérieure du réservoir et permet aux gaz contenus dans le réservoir de s'en échapper lors du roulage, lorsque leur pression augmente.

Tel est le cas notamment lorsque le réservoir subit des vibrations qui provoquent un dégazage du carburant liquide, ou lorsqu'un échauffement du réservoir entraîne une dilatation du carburant liquide et des gaz.

Un dispositif pour séparer le carburant liquide des produits en phase vapeur ou "SLV" 6 est monté à l'extrémité du tube 5 située dans le réservoir.

Il peut s'agir, à la manière connue, d'un clapet.

Un conduit de gaz 7 est raccordé à l'extrémité du tube située à l'extérieur du réservoir, pour aboutir à un canister 8 dont le détail est fourni par la figure 2.

Le réservoir comporte un logement 9 pour recevoir le canister, ledit logement étant ouvert vers l'extérieur de manière à permettre la mise en place du canister.

L'emplacement du logement 9 sur le réservoir est déterminé en fonction de l'environnement du véhicule du réservoir, de manière que le canister puisse être facilement démonté une fois le réservoir installé sur le véhicule.

Deux autres conduits aboutissent au canister, l'un 10 pour évacuer l'air débarrassé de vapeurs de carburant issu du canister, l'autre 11 pour aspirer de l'air provenant du canister lorsque l'on procède à la purge de ce dernier.

On va maintenant décrire le canister en détail en référence à la figure 2.

Le canister comporte un boîtier 12 de forme extérieure cylindrique, muni d'une collerette 13 à l'une de ses extrémités pour assurer son positionnement dans le logement 9 du réservoir.

Des moyens de rétention (non représentés), par exemple par encliquetage, empêchent le canister de quitter le logement 9 une fois mis en place.

A l'intérieur du canister, on distingue tout d'abord deux petits compartiments 14 et 15 communiquant l'un avec l'autre et prévus pour recevoir respectivement un "ISR" ou dispositif pour interdire le surremplissage du réservoir et un "ROV" ou dispositif pour empêcher le carburant liquide contenu dans le réservoir de s'échapper par le canister en cas de retournement du véhicule.

Un troisième compartiment 16 s'étend sur environ la moitié de la longueur du canister et contient du charbon actif apte à adsorber les molécules de carburant contenues dans les gaz arrivant au canister.

Ce troisième compartiment 16 communique avec celui 15 du "ROV" par l'intermédiaire d'un tube 16a aboutissant au coeur du charbon actif après avoir traversé une première chambre de communication 17.

A l'opposé de la chambre 17, une seconde chambre de communication 18 communique avec le compartiment 16.

Le canister comporte en outre, débouchant à l'extérieur du canister, trois canaux dont le premier 19 aboutit à l'"ISR", le deuxième 20 aboutit à la chambre de communication 18 et le troisième 21 aboutit à la chambre de communication 17.

Les conduits de gaz 7, d'évacuation d'air 10 et d'aspiration 11 sont branchés respectivement sur les extrémités externes des canaux 19, 20 et 21.

Suivant les configurations adoptées par les constructeurs d'automobiles, on peut prévoir des électrovannes (non représentées) qui ont pour fonction par exemple de fermer le conduit 11 et d'ouvrir le conduit 7 lors du fonctionnement normal du canister, et inversement lors des purges du canister.

En fonctionnement normal, le canister reçoit les gaz provenant du réservoir par le conduit de gaz 7. Les gaz traversent l'"ISR", puis le "ROV" et parviennent, via le tube 16a, au coeur du charbon actif qu'ils traversent.

Les molécules de carburant sont fixées par adsorption dans le charbon actif et seul l'air atteint la chambre de communication 18 pour quitter le canister par le canal 20, jusqu'au conduit d'évacuation d'air 10.

Lors des phases de purge, une aspiration d'air par le conduit 11 entraîne une circulation d'air provenant du conduit d'air 10 à travers le charbon actif, en sens inverse du sens de filtrage.

Les molécules de charbon actif sont alors libérées par désorption et les gaz ainsi recueillis sont envoyés à un système de retraitement ou, plus traditionnellement, au circuit d'alimentation en carburant du moteur qui réalise à la fois l'aspiration et le recyclage du carburant gazeux.

Dans le mode de réalisation de la figure 3, le canister 22 comporte un boîtier qui est réalisé directement dans la paroi 23 du réservoir.

Ce dernier est réalisé par injection de matière plastique dans un moule d'injection dont l'empreinte définit la forme du réservoir et celle du logement constituant le boîtier du canister.

Comme dans le mode de réalisation précédent, on retrouve dans ce canister des compartiments 24 et 25 pour le "ROV" et pour l'"ISR" qui communiquent entre eux.

Un troisième petit compartiment 26, communiquant en série avec le compartiment 24, contient le "SLV".

Le compartiment 25 communique avec l'intérieur du réservoir par un orifice 27 ménagé dans le fond du logement.

Les gaz s'évacuent du réservoir par cet orifice 27, qui est de préférence situé en un point haut du réservoir, et traversent successivement les compartiments 25, 24 et 26 pour aboutir à une chambre de communication 28. Bien entendu, l'ordre des trois dispositifs "ISR", "ROV" et "SLV" pourrait être différent de celui décrit ici.

A côté des trois petits compartiments, le boîtier du canister comporte un grand compartiment 29 contenant une cartouche filtrante amovible remplie de charbon actif, comprise entre deux grilles 30 et 31. La grille 31 la plus proche du réservoir est fixe tandis que la grille opposée 30 est solidaire d'un bouchon 32 engagé dans une cheminée 33 qu'il obture de façon étanche grâce à des joints toriques 34.

Des entretoises 35 maintiennent la grille 30 à distance du bouchon 32 de manière qu'il subsiste entre eux un espace permettant au compartiment 29 de communiquer avec la chambre de communication 28.

Un tube 29a met en communication ledit espace avec le coeur du charbon actif.

Ainsi, les gaz ayant traversé successivement l'"ISR", le "ROV" et le "SLV" pénètrent au coeur du grand compartiment 29 où ils sont filtrés.

Les molécules de carburant sont fixées par le charbon actif et seul l'air ressort du compartiment 29 par la grille 31, dans une chambre de communication 36.

Un canal 37 débouche dans cette chambre 36 et traverse toute la longueur du boîtier pour se raccorder au conduit d'évacuation d'air 10.

Le conduit d'aspiration 11 aboutit à un autre petit compartiment 38 aligné avec les trois autres mais séparé de ceux-ci par la chambre de communication 28. Le compartiment 38 contient une électrovanne qui ferme le passage de l'aspiration lorsque le canister fonctionne.

Pour la purge du canister, l'électrovanne ouvre le passage et de l'air est aspiré par le conduit d'air 10, traverse le charbon actif contenu dans le grand compartiment 29 et se charge des molécules de carburant désorbées.

Dans ce mode de réalisation,. l'évacuation des gaz du réservoir n'est jamais interrompue, même pendant la purge du canister, étant donné que l'orifice 27 demeure ouvert en permanence.

## Revendications

1. Réservoir à carburant comportant un canister (8) destiné à être placé sur un circuit de mise à l'air et à renfermer un produit de filtrage apte à fixer des molécules de carburant gazeux, tel que :
- le canister comporte un boîtier (12) contenant au moins un compartiment (14, 15) communiquant avec le produit de filtrage (16), **caractérisé par le fait que** le compartiment est apte à recevoir un dispositif choisi parmi les dispositifs suivants : dispositif de fermeture du circuit de mise à l'air en cas de retournement du réservoir, dispositif pour interdire le surremplissage du réservoir et dispositif pour séparer le carburant liquide des gaz à évacuer, et que
- le réservoir comporte un logement (9) pour recevoir le canister (8), ledit logement étant ouvert vers l'extérieur de manière à permettre la mise en place du canister.

2. Réservoir selon la revendication précédente, **caractérisé par le fait que** le boîtier (12) présente une forme extérieure cylindrique.

3. Réservoir selon l'une des deux revendications précédentes, **caractérisé par** le fait le boîtier (12) est muni d'une collerette (13) à l'une de ses extrémités pour assurer son positionnement dans le logement (9).

4. Réservoir selon l'une quelconque des revendications précédentes, **caractérisé par le fait qu'**il comporte des moyens de rétention destinés à empêcher le canister de quitter le logement (9) une fois mis en place.

5. Réservoir selon l'une quelconque des revendications précédentes, **caractérisé par le fait qu'**il est obtenu, par collage ou soudage, de deux parties obtenues par injection de matière plastique.

## Claims

1. Fuel tank comprising a canister (8) intended to be placed on a vent circuit and to contain a filtering product able to fix gaseous fuel molecules, such that:
- the canister comprises a casing (12) containing at least one compartment (14, 15) communicating with the filtering product (16),
**characterized in that** the canister is also able to receive a device chosen from among the following devices: a device for closing the vent circuit if the tank should roll over, a device for preventing overfilling of the tank and a device for separating the liquid fuel from the gases that are to be evacuated, and
- the tank comprises a housing (9) to accommodate the canister (8), the said housing being open to the outside in such a way as to allow the canister to be fitted.

2. Tank according to the preceding claim, **characterized in that** the casing (12) has a cylindrical exterior shape.

3. Tank according to one of the two preceding claims, **characterized in that** the casing (12) is equipped with a flange (13) at one of its ends so as to position it in the housing (9).

4. Tank according to any one of the preceding claims, **characterized in that** it comprises retaining means intended to prevent the canister from leaving the housing (9) once it has been fitted.

5. Tank according to any one of the preceding claims, **characterized in that** it is obtained, by bonding or welding, from two parts obtained by the injection-moulding of plastic.

## Patentansprüche

1. Kraftstofftank, der einen Behälter (8) aufweist, welcher ausgelegt ist für ein Anbringen in einer Lüftungsvorrichtung und für ein Aufnehmen eines Filtrierungsmittels, das die Moleküle des gasförmigen Kraftstoffs zurückzuhalten in der Lage ist, wobei
- der Behälter ein Gehäuse (12) aufweist, das mindestens eine Abteilung (14,15) hat, die mit dem Filtrierungsmittel (16) in Kommunikation ist, **dadurch gekennzeichnet, dass** der Behälter zudem ausgelegt ist für ein Aufnehmen einer Einrichtung, die aus den folgenden Einrichtungen ausgewählt ist: Eine Einrichtung zum Schließen der Lüftungsvorrichtung für den Fall des Umdrehens des Kraftstofftanks, eine Einrichtung zur Verhinderung eines Überfüllens des Kraftstofftanks und eine Einrichtung zum Separieren des flüssigen Kraftstoffs von den abzuführenden Gasen und
- der Kraftstofftank einen Unterbringungsraum (9) für die Aufnahme des Behälters (8) aufweist, wobei dieser Unterbringungsraum nach außen hin offen ist, sodass es möglich ist, den Behälter an seinen Platz zu bringen.

2. Kraftstofftank nach dem vorangegangenen Anspruch, **dadurch gekennzeichnet, dass** das Gehäuse eine zylindrische Außenform aufweist.

3. Kraftstofftank nach einem der beiden vorangegangenen Patentansprüche, **dadurch gekennzeichnet, dass** das Gehäuse (12) mit einem Kragen (13) an einem seiner Extrembereiche versehen ist, um sein Positionieren innerhalb des Unterbringungsraumes (9) sicherzustellen.

4. Kraftstofftank nach einem beliebigen der vorangegangenen Patentansprüche, **dadurch gekennzeichnet, dass** er Rückhaltemittel aufweist, die dafür bestimmt sind, dass sie ein Lösen des Behälters aus dem Unterbringungsraum (9) verhindern, wenn der Behälter einmal an seinen Platz gebracht ist.

5. Kraftstofftank nach einem beliebigen der vorangegangenen Patentansprüche, **dadurch gekennzeichnet, dass** er durch Kleben oder Schweißen von zwei Teilstücken erstellt wurde, die aus Kunststoff im Spritzgussverfahren hergestellt worden sind.
